# EUROPÄISCHE PATENTANMELDUNG

(11) **EP 2 338 342 A1**
(43) Veröffentlichungstag der Anmeldung: **29.06.2011**
(21) Anmeldenummer: 09016043.3
(22) Anmeldetag: 24.12.2009
(51) Int. Cl.: A01N 47/44, C08G 18/38

(54) **Polyharnstoff mit bioziden Eigenschaften**

(71) Anmelder: Oberwalder, Sebastian, 81371 München (DE); Oberwalder, Wolf, 5020 Salzburg (AT); Schark, Christopher, 5071 Wals (AT)
(72) Erfinder: Oberwalder, Sebastian, 81371 München (DE); Oberwalder, Wolf, 5020 Salzburg (AT)

(57) **Zusammenfassung**

Die Erfindung betrifft einen Polyharnstoff aus einer Guanidinium-Verbindung der Formel (I) 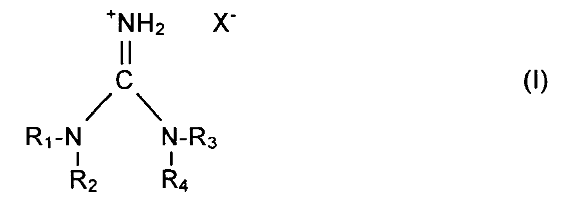 wobei R₁, R₂, R₃, R₄ = unabhängig voneinander H, [-C(=⁺NH₂)-NHR₅ + X'], oder ein organischer Rest,
R₅ = H oder ein organischer Rest und
X⁻ = Anion;
und einer Diisocyanat-Verbindung der Formel (II)

O=C=N-R₆-N=C=O (II)

wobei R₆ = organischer Rest, der 1-40 Kohlenstoffatome umfasst, und/oder einer Diisothiocyanat-Verbindung der Formel (III)

S=C=N-R₇-N=C=S (III)

wobei R₇ = organischer Rest, der 1-40 Kohlenstoffatome umfasst, das Verfahren zu dessen Herstellung, einen Gegenstand, der den Polyharnstoff enthält, sowie die Verwendung des Polyharnstoffs als Beschichtungsmaterial.

## Beschreibung

Die vorliegende Erfindung betrifft einen neuartigen Polyharnstoff aus Guanidinium-Verbindungen und Isocyanaten und/oder Isothiocyanaten sowie dessen Verwendung als Beschichtungsmaterial, Pflanzenschutzmittel und Arzneimittel.

Seit langem bekannte Vertreter der Stoffgruppe der polymeren Guanidine sind vor allem Poly-(hexamethylenguanidiniumchlorid) u.a. beschrieben in US-PS 2,325,586 und unter den Handelsnamen "Poly-Guanidinium-Chlorid" auf dem Markt, sowie Poly-(hexamethylenbiguanidinchlorid), das unter den Handelsnamen "Vantocil", "Cosmocil", und "Poly-Hexamethylen-Biguanidin" vertrieben wird.

Daneben ist eine Reihe von weiteren polymeren Guanidiniumchloriden bekannt, welche unter Verwendung anderer Di- und Polyaminen hergestellt werden können, wie unverzweigten C₆ - C₁₂ Alkylenaminen (EP 0 439 698, EP 0 439 699) bzw. einer Mischung unterschiedlicher Amine wie etwa Hexamethylendiamin und diversen Oxyalkylen-Diaminen bzw. Oxypropylen-Diaminen (WO 01/85676).

Neben der Verwendung von unterschiedlichen Di- und Polyaminen bzw. unterschiedlichen Kombinationen von Di- und Polyaminen zur Polymerisation von Guanidinen und Biguanidinen sind auch Polymere von anderen Guanidinsalzen als Guanidiniumchlorid bekannt, insbesondere Guanidiniumphosphat, Guanidiniumcarbonat und Guanidiniumhydroxid. Diese anderen Guanidinsalze können - ebenso wie Guanidiniumchlorid - unter Verwendung diverser Di- und Polyamine wie z.B. HMDA, Triethylenglykoldiamin und Polyoxyalkylendiaminen polymerisiert werden (WO 01/85676, WO 2004/052961 u. WO 2008/080184).

Für die beschriebenen bekannten polymeren Guanidine bzw. polymeren Biguanidine existiert eine Vielzahl von bekannten Anwendungen, wie insbesondere deren Einsatz als Biozide, einschließlich Fungizide und Antibiotika (EP 0 439 698; EP 0 439 699; WO 99/54291; WO 01/85676; AT 2156/2006) sowie die Anwendung als Zytostatika (AT 2004/000023, EP 1 734 064). Neben dem unmittelbaren Einsatz dieser Verbindungen für die genannten Zwecke ist teilweise auch deren Einsatz unter Verwendung anderer Substanzen als physikalische Lösungs- bzw. Trägermittel bekannt. Schließlich sind physikalische Vermischungen von polymeren (Bi-)Guanidinen mit anderen Substanzen zur Desinfektion dieser Substanzen bekannt.

Bekannte chemische Weiterverarbeitungen der oben beschriebenen polymeren Guanidine beschränken sich auf den Austausch der Gegenionen der polymeren Guanidine, z.B. die Umwandlung von Poly-Guanidinium-Chlorid) in Poly-Guanidinium-Hydroxid (WO 2008/080184).

Polyharnstoffe werden aus einer Aminkomponente und einem Diisocyanat polymerisiert und finden insbesondere Anwendung als Klebstoffe im Bereich Holz und Papier, Schaumstoffe, sowie als Beschichtungsmaterial.

Der Verwendung von Guanidinium-Verbindungen als Aminkomponente bei der Polymerisation von Polyharnstoff steht entgegen, dass bei Raumtemperatur (ca. 20°C) in der Regel Guanidium- und Diisocyanat-Verbindungen in unterschiedlichen Aggregatzuständen vorliegen. Gleiches gilt für erhöhte Reaktionstemperaturen. So liegt der Schmelzpunkt von Guanidiniumchlorid bei >185 °C, während einzelne Isocyanate bei dieser Temperatur bereits ihren Siedepunkt überschritten haben. Des Weiteren entstehen beim Schmelzen von Guanidinen unerwünschte Nebenprodukte (z.B. gasförmige Salzsäure bei Guanidiniumchlorid). Überdies würde die bekannte Diisocyanat-Amin Reaktion bei derartig hohen Reaktionstemperaturen von über 185 °C extrem schnell und somit nur sehr schwer kontrollierbar ablaufen. Diese Problematiken ändern sich auch bei Anlegen eines entsprechenden Überdrucks nur geringfügig, da dadurch der Schmelzpunkt der Guanidine nicht erniedrigt werden kann. Lediglich die Siedepunkte der Diisocyanate können auf diesem Weg beeinflusst werden. Die Verwendung von Lösungsmitteln für die eingesetzten Guanidine zur Durchführung der Reaktion unter Normaltemperatur gestaltet sich ebenfalls schwierig, da nahezu alle Lösungsmittel für Guanidine gut bis sehr gut mit Diisocyanaten reagieren, und somit die gewünschte Reaktion zwischen den Guanidinen und den Diisocyanaten zumindest beeinflussen. Dies gilt insbesondere für Wasser, welches aufgrund der Abspaltung von CO₂ bei der Reaktion mit Diisocyanaten zu einem erheblichen Aufschäumen des Reaktionsgemisches sowie zu einer deutlichen Veränderung desselben führt. Nicht mit Diisocyanaten reagierende Lösungsmittel, wie z.B. Toluol hingegen sind unter Normaltemperatur in der Praxis zur Lösung der meisten Guanidinsalze ungeeignet.

Es besteht die Aufgabe, die genannten Widerstände zu überwinden und neue Polyharnstoffe herzustellen, die biozide Eigenschaften aufweisen.

Die vorliegende Erfindung betrifft daher einen Polyharnstoff aus einer Guanidinium-Verbindung der Formel (I) 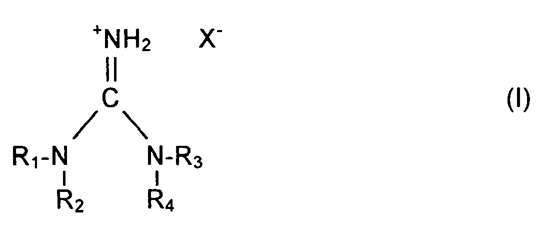 wobei R₁, R₂, R₃, R₄ = unabhängig voneinander H, [-C(=⁺NH₂)-NHR₅ + X⁻],
oder ein organischer Rest,
R₅ = H oder ein organischer Rest und
X- = Anion;
und einer Diisocyanat-Verbindung der Formel (II)

O=C=N-R₆-N=C=O (II)

wobei R₆ = organischer Rest, der 1-40 Kohlenstoffatome umfasst,
und/oder einer Diisothiocyanat-Verbindung der Formel (III)

S=C=N-R₇-N=C=S (III)

wobei R₇ = organischer Rest, der 1-40 Kohlenstoffatome umfasst.

Es wurde überraschend gefunden, dass sich Guanidinium-Verbindungen mit Diisocyanat- und/oder Diisothiocyanat-Verbindungen zu Polyharnstoff polymerisieren lassen. Völlig überraschend weisen die neuartigen Polyharnstoffe zudem vergleichbare biozide Eigenschaften wie polymere Guanidine auf.

Da nach den bekannten wissenschaftlichen Theorien zur Wirkweise der polymeren Guanidine diese vor allem dadurch wirken, dass sie sich auf der Oberfläche von Bakterien, Viren und Pilzen anlagern und diese durch ihre starke Ladung inaktivieren (McDonnell G., Denver Russell A., Antiseptics and Disinfectants: Activity, Action, and Resistance, Clinical Microbiology Reviews, Vol. 12, No. 1 (1999), p. 147-179, Gilbert P. et al., Barrier properties of the Gram-negative cell envelope towards high molecular weight polyhexamethylene biguanides, J. Appl. Bacteriol. 69 (1990) p.585-592 und Ikeda T. et al., Interaction of a polymeric biguanide with phospholipid membranes, Biochim. Biophys. Acta 769 (1984) p. 57-66), wäre durch eine feste Einbindung der polymeren Guanidine in längerkettige bzw. langkettige Moleküle, welche eine solche Anlagerung nahezu ausschließen, eine Abnahme, wenn nicht gar völlige Aufhebung der bioziden Wirkung der Guanidinium-Verbindung in den erfindungsgemäßen Polyharnstoffen zu erwarten, vergleichbar mit dem völligen Verschwinden der stark bioziden Wirkung von Isocyanaten durch deren Reaktion mit Aminen zu Polyharnstoffen.

Der Polyharnstoff gemäß der vorliegenden Erfindung weist vorzugsweise die folgende Struktur auf:

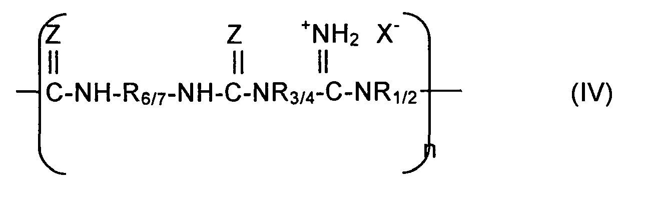

Dabei kann Z Sauerstoff und/oder Schwefel sein, abhängig davon, ob für die Polymerisation des Polyharnstoffs eine Isocyanat-Komponente, eine Isothiocyanat-Komponente oder eine Mischung aus Isocyanat- und Isothiocyanant-Komponenten Verwendung findet.

n stellt dabei die Kettenlänge des Polyharnstoffs dar. Von Interesse ist hierbei speziell die Anzahl der Guanidinium-Verbindungen im Polyharnstoff.

Die Anzahl n der Guanidinium-Verbindungen im Polyharnstoff kann 2-100 betragen, bevorzugt 2-50, stärker bevorzugt 2-20.

Es ist bevorzugt, dass die mittlere Molmasse des Polyharnstoffs mindestens 250 g/mol, stärker bevorzugt mindestens 400 g/mol beträgt. Die obere Grenze der mittleren Molmasse des Polyharnstoffs beträgt üblicherweise höchstens 5000 g/mol, bevorzugt 3500 g/mol, am stärksten bevorzugt 2500 g/mol.

Das molekulare Verhältnis der Guanidinium-Verbindung zu der Diisocyanat-Verbindung und/oder Diisothiocyanat-Verbindung im Polyharnstoff liegt bevorzugt im Bereich von 10 mol : 1 mol bis 1 mol : 10 mol, stärker bevorzugt im Bereich von 5 mol : 1 mol bis 1 mol : 5 mol, an stärksten bevorzugt im Bereich von 4 mol : 1 mol bis 1 mol : 4 mol. Der Einbau eines höheren Molanteils des Guanidinium-Verbindung auf der einen Seite oder der Diisocyanat-Verbindung und/oder Diisothiocyanat-Verbindung auf der anderen Seite während der Polymerisation führt zu modifizierten Eigenschaften des resultierenden Polyharnstoffs. So lassen sich die endständigen funktionellen Gruppen des Polyharnstoffs über das molekulare Verhältnis der Edukte steuern. Bei molekularem Überschuss der Guanidinium-Verbindung ist ein Polyharnstoff mit erhöhtem Anteil an endständigen Aminogruppen zu erwarten, während bei molekularem Überschuss der Diisocyanat-Verbindung und/oder Diisothiocyanat-Verbindung ein Polyharnstoff mit erhöhtem Anteil an endständigen Isocyanat- und/oder Isothiocyanatgruppen erwartet wird.

Der erfindungsgemäße Polyharnstoff enthält eine Diisocyanat-Verbindung und/oder eine Diisothiocyanat-Verbindung. Dabei kann der Polyharnstoff entweder ausschließlich eine Diisocyanat-Verbindung, eine Diisothiocyanat-Verbindung oder eine Mischung aus Diisocyanat- und Diisothiocyanat-Verbindung enthalten.

Eine Diisocyanat-Verbindung kann hierbei aus einer einzigen Diisocyanat-Verbindung oder aus mehreren verschiedenen Diisocyanat-Verbindungen bestehen. Gleiches gilt für die Düsothiocyanat-Verbindung. "Verschieden" bedeutet hierbei, dass sich der Rest R₆ der Diisocyanat- oder der Rest R₇ Diisothiocyanat-Verbindung in mindestens einem Atom unterscheiden.

Die Diisocyanat-Verbindung aus Formel (II) enthält einen organischen Rest R₆, der 1-40 Kohlenstoffatome umfasst. Es ist bevorzugt, dass der organische Rest R₆ ein aliphatischer oder aromatischer Kohlenwasserstoffrest mit 1-40 Kohlenstoffatomen, stark bevorzugt mit 4-20 Kohlenstoffatomen und am stärksten bevorzugt mit 6-16 Kohlenstoffatomen ist.

Besonders bevorzugte Diisocyanat-Verbindungen sind 1,6-Diisocyanatohexan (HDI), 1-Isocyanato-3-isocyanatomethyl-3,5,5-trimethyl-cyclohexan (IPDI), 1,4-Diisocyanato-benzen (PPDI), 1,5-Diisocyanato-naphtalin (NDI), 4,4'-Diisocyanato-3,3'-dimethyl-1,1'-biphenyl (TODI), Diisocyanato-Toluol (TDI), 4,4'-Diisocyanato-diphenylmethan (MDI) und 1-Isocyanato-4-[(4-isocyanatocyclohexyl)methyl]cyclohexan (HMDI).

Die Dithioisocyanat-Verbindung aus Formel (III) enthält einen organischen Rest R₇, der 1-40 Kohlenstoffatome umfasst. Es ist bevorzugt, dass der organische Rest R₇ ein aliphatischer oder aromatischer Kohlenwasserstoffrest mit 1-40 Kohlenstoffatomen, stark bevorzugt mit 4-20 Kohlenstoffatomen und am stärksten bevorzugt mit 6-16 Kohlenstoffatomen ist.

Besonders bevorzugte Diisothiocyanat-Verbindungen sind 1,6-Diisothiocyanato-hexan (HDIT), 1,4-Diisothiocyanato-butan, 1,8-Diisothiocyanato-octan, 1,4- und 2,6- Toluen-diisothiocyanat, 1-Isothiocyanato-3-isothiocyanatomethyl-3,5,5-trimethyl-cyclohexan (IPDIT), 1,4-Diisothiocyanato-benzen (PPDIT), 1,5-Diisothiocyanato-naphtalin (NDIT), 4,4'-Diisothiocyanato-3,3'-dimethyl-1,1'-biphenyl (TODIT), Diisothiocyanato-Toluol (TDIT), 4,4'-Diisothiocyanato-diphenylmethan (MDIT), 1-Isothiocyanato-4-[(4-isothiocyanatocyclohexyl)methyl]cyclohexan (HMDIT), Phosphorylfluorid-diisothiocyanat, Thiophosphorylfluoriddiisothiocyanat, 1,1-Dicarbonsäure- diisothiocyanat, Carbonyldiisothiocyanat, 4,4'-Diisothiocyanato-stilben-2,2'-disulfonat (DIDS) und 1,3-Diisothiocyanat-tetrabutyldistannat

Der erfindungsgemäße Polyharnstoff enthält eine Guanidinium-Verbindung. Dabei kann der Polyharnstoff entweder ein Guanidinsalz, ein Biguanidinsalz, ein Guanidiniumderivat mit den organischen Resten R₁, R₂, R₃ und/oder R₄ oder ein Biguanidiniumderivat mit den organischen Resten R₁, R₂, R₃, R₄ und/oder R₅ enthalten.

In einer bevorzugten Ausführungsform enthält keiner der Reste R₁, R₂, R₃ und/oder R₄ der Guanidinium-Verbindung nach Formel (I) einen organischen Rest.

In einer weiteren bevorzugten Ausführungsform enthält mindestens einer der Reste R₁, R₂, R₃ und/oder R₄ der Guanidinium-Verbindung nach Formel (I) einen organischen Rest.

In einer weiteren bevorzugten Ausführungsform enthalten mindestens zwei der Reste R₁, R₂, R₃ und/oder R₄ der Guanidinium-Verbindung nach Formel (I) einen organischen Rest, die gleich oder verschieden voneinander sein können.

In einer weiteren bevorzugten Ausführungsform enthalten mindestens drei der Reste R₁, R₂, R₃ und/oder R₄ der Guanidinium-Verbindung nach Formel (I) einen organischen Rest, die gleich oder verschieden voneinander sein können.

In einer weiteren bevorzugten Ausführungsform enthalten alle vier Reste R₁, R₂, R₃ und/oder R₄ der Guanidinium-Verbindung nach Formel (I) einen organischen Rest, die gleich oder verschieden voneinander sein können.

Eine Guanidinium-Verbindung kann hierbei aus einer einzigen Guanidinium-Verbindung oder aus mehreren verschiedenen Guanidinium-Verbindung bestehen. "Verschieden" bedeutet hierbei, dass sich mindestens einer der Reste R₁, R₂, R₃, R₄ oder eventuell R₅ der einzelnen Guanidinium-Verbindungen in mindestens einem Atom unterscheiden. "Gleich" bedeutet dagegen, dass die Reste R₁, R₂, R₃, R₄ oder eventuell R₅ der einzelnen Guanidinium-Verbindungen die gleiche Atomanzahl sowie die gleiche Struktur aufweisen.

Die Guanidinium-Verbindung liegt als Salz vor mit einem Anion X', das bevorzugt ein Fluorid, Chlorid, Bromid, Iodid, Hydroxid, Acetat, Phosphat, Diphosphat, Sulfat, Sulfid, Nitrat, Thiocyanat, Carbonat, Maleat, Fumarat, Tartrat, Mesylat, Gluconat oder Toluolsulfonat ist. Besonders bevorzugt sind Chlorid, Hydroxid und Phosphat als Anion.

Für den Fall, dass es sich bei den Reste R₁, R₂, R₃, R₄ und optional R₅ in Formel (I) um organischen Reste handelt, können diese unabhängig voneinander aliphatische oder aromatische Kohlenwasserstoffreste mit 1-40 Kohlenstoffatomen, stark bevorzugt mit 4-20 Kohlenstoffatomen und am stärksten bevorzugt mit 6-16 Kohlenstoffatomen sein.

Des Weiteren können die Reste R₁, R₂, R₃, R₄ und optional R₅ Alkohole, Amine, Aldehyde, Ketone, Ether, Carbonsäuren oder Carbonsäureester mit 1-40 Kohlenstoffatomen, stark bevorzugt mit 4-20 Kohlenstoffatomen und am stärksten bevorzugt mit 6-16 Kohlenstoffatomen sein.

Als Guanidinium-Verbindung kann neben einer monomeren Guanidinium-Verbindung auch eine bereits polymerisierte Polyguanidinium-Verbindung eingesetzt werden.

Die polymerisierte Polyguanidinium-Verbindung kann dabei eine Guanidinium-Verbindung enthalten, die ein Guanidinsalz, Biguanidinsalz, ein Guanidiniumderivat mit ein oder zwei verschiedenen organischen Resten, bevorzugt mit 1-40 Kohlenstoffatomen, oder ein Biguanidiniumderivat mit ein oder zwei verschiedenen organischen Resten, bevorzugt mit 1-40 Kohlenstoffatomen, ist.

Als Anion kommt vorzugsweise bevorzugt ein Fluorid, Chlorid, Bromid, Iodid, Hydroxid, Acetat, Phosphat, Diphosphat, Sulfat, Sulfid, Nitrat, Thiocyanat, Carbonat, Maleat, Fumarat, Tartrat, Mesylat, Gluconat oder Toluolsulfonat in Frage. Besonders bevorzugt sind Chlorid, Hydroxid und Phosphat.

Besonders bevorzugt wird die Guanidinium-Verbindung aus einer Gruppe bestehend aus Guanidinium-Fluorid, Guanidinium-Chlorid, Guanidinium-Bromid, Guanidinium-Iodid, Guanidinium-Hydroxid, Guanidinium-Acetat, Guanidinium-Phosphat, Guanidinium-Diphosphat, Guanidinium-Sulfat, Guanidinium-Sulfid, Guanidinium-Nitrat, Guanidinium-Thiocyanat, Guanidinium-Carbonat, Guanidinium-Maleat, Guanidinium-Fumarat, Guanidinium-Tartrat, Guanidinium-Mesylat, Guanidinium-Gluconat, Guanidinium-Toluolsulfonat, Biguanidinium-Fluorid, Biguanidinium-Chlorid, Biguanidinium-Bromid, Biguanidinium-Iodid, Biguanidinium-Hydroxid, Biguanidinium-Acetat, Biguanidinium-Phosphat, Biguanidinium-Diphosphat, Biguanidinium-Sulfat, Biguanidinium-Sulfid, Biguanidinium-Nitrat, Biguanidinium-Thiocyanat, Biguanidinium-Carbonat, Biguanidinium-Maleat, Biguanidinium-Fumarat, Biguanidinium-Tartrat, Biguanidinium-Mesylat, Biguanidinium-Gluconat oder Biguanidinium-Toluolsulfonat ausgewählt.

Als weitere Komponente enthält die Polyguanidinium-Verbindung vorzugsweise eine Aminverbindung mit mindestens 2 Amingruppen, die bevorzugt aus einer Gruppe bestehend aus Ethylendiamin, Triethylenglycoldiamin, Hexamethylendiamin, Diaminopropan, Diethylentriamin und Polyoxyalkylendiaminen ausgewählt wird. Das Polyoxyalkylendiamin ist bevorzugt eine Verbindung der allgemeinen Formel (V):

H₂N-[(CR₈H)ₙO]ₘ-NH₂ (V)

in welcher n und m unabhängig voneinander eine ganze Zahl zwischen 2 und 10, vorzugsweise 2 ist, und R₈ Wasserstoff oder ein Kohlenwasserstoffrest mit 1-6 Kohlenstoffatomen, vorzugsweise einem Methylenrest ist.

Die mittlere Molmasse des eingesetzten polymeriserten Guanidinium-Derivats oder polymerisierten Guanidinsalzes beträgt vorzugsweise mindestens 150 g/mol, stärker bevorzugt mindestens 200 g/mol. Die obere Grenze der mittleren Molmasse des polymeriserten Guanidinium-Derivats oder des polymerisierten Guanidinsalzes beträgt üblicherweise höchstens 1000 g/mol, bevorzugt 750 g/mol, am stärksten bevorzugt 500 g/mol.

Die mittlere Molmasse des eingesetzten polymeriserten Biguanidinium-Derivats oder polymerisierten Biguanidinsalzes beträgt vorzugsweise mindestens 200 g/mol, stärker bevorzugt mindestens 300 g/mol. Die obere Grenze der mittleren Molmasse des polymeriserten Biguanidinium-Derivats oder des polymerisierten Biguanidinsalzes beträgt üblicherweise höchstens 4000 g/mol, bevorzugt 3500 g/mol, am stärksten bevorzugt 3000 g/mol.

Die Polykondensation der Polyguanidinium-Verbindung kann hierbei in einem ersten Polymerisationsschritt vor der Polymerisation des Polyharnstoffs unter den bekannten Polymerisationsbedingungen oder in einem gemeinsamen Polymerisationsschritt gleichzeitig mit der Polymerisation des Polyharnstoffs erfolgen.

Neben der Guanidinium-Verbindung der Formel (I) und der Diisocyanat-Verbindung der Formel (II) bzw. der Isothiocyanat-Verbindung der Formel (III) kann der erfindungsgemäße Polyharnstoff auch weitere Komponenten aufweisen, die in die Polyharnstoffkette einpolymerisiert werden können. Beispiele für derartige weitere Komponenten sind Di- oder Polyamine, Di- oder Polyole und Isocyanat- oder Isothiocyanat-Verbindungen.

Der Einsatz von Isocyanat- oder Isothiocyanat-Verbindungen führt zum Abbruch der Polymerisationsreaktion und somit zum Kettenabbruch. Die Isocyanat- oder Isothiocyanat-Verbindungen sind vorzugsweise verbunden mit einem organischen Rest mit 1-40 Kohlenstoffatomen. Dieser organische Rest umfasst vorzugsweise cyclische oder heterocyclische Aromaten ausgewählt aus einer Gruppe bestehend aus Fluoresceinen, Xanthenen, Rhodaminen, Cumarinen, Berberinen, Chininen, DAPI, Nilrot, Indocyangrün, Stilbenen und Porphyrinen. Besonders bevorzugt in diesem Zusammenhang sind die Fluoresceine.

Vorzugsweise liegt der Anteil der weiteren Komponenten im Bereich von 0,01 bis 30 Gew.-%, stärker bevorzugt bei 0,05 bis 20 Gew.-%, am stärksten bevorzugt bei 0,1 bis 10 Gew.-% des Gesamtgewichts des Polyharnstoffs.

In einer weiteren Ausführungsform besteht der erfindungsgemäße Polyharnstoff ausschließlich aus den Verbindungen der Formeln (I), (II) und/oder (III).

Die vorliegende Erfindung bezieht sich auch auf das Verfahren zur Herstellung des erfindungsgemäßen Polyharnstoffs.

Prinzipiell müssten für eine Polymerisation des erfindungsgemäßen Polyharnstoffs alle Komponenten also die Guanidinium-Verbindung sowie die Diisocyanat-Verbindung und/oder die Diisothiocyanat-Verbindung über deren Schmelzpunkt erhitzt werden. Aufgrund des hohen Schmelzpunkts der Guanidinium-Komponente (z.B. >185°C für Guanidinium Chlorid) wäre die Auswahl der Diisocyanat- und/oder Diisothiocyanat-Verbindung sehr eingeschränkt, da einige dieser Verbindungen bei derartigen Temperaturen bereits ihren Siedepunkt überschritten haben bzw. mit sich selbst in Reaktion treten und es bei diesen Bedingungen bei einzelnen Diisocyanat- und/oder Diisothiocyanat-Verbindungen bereits zur Zersetzung kommt.

Nach dem erfindungsgemäßen Verfahren zur Herstellung des Polyharnstoffs wird die Guanidinium-Verbindung in einem Lösungsmittel verdünnt und anschließend mit der gegebenenfalls ebenfalls mit einem Lösungsmittel verdünnten Diisocyanat-Verbindung und/oder Diisothiocyanat-Verbindung vermischt.

Bei der Auswahl der Lösungsmittel für die Guanidinium-Verbindung und für die Diisocyanat- und/oder Diisothiocyanat-Verbindung ist zu beachten, dass zwischen dem eingesetzten Lösungsmittel und den Edukten keine oder zumindest möglichst wenig unerwünschte Nebenreaktionen stattfinden.

Als Lösungsmittel für die Guanidinium-Verbindung werden bevorzugt Alkohole oder Amine oder eine Mischung daraus verwendet. Dabei finden insbesondere einwertige oder zweiwertige Alkohole sowie primäre oder sekundäre Amine Verwendung, bevorzugt Diole, Diamine, wasserlösliche Polyester- oder Polyetherpolyole oder wasserlösliche Polyester- oder Polyetherglycole oder eine Mischung daraus. Das Mischungsverhältnis von Lösungsmittel und Guanidinium-Verbindung liegt bevorzugt im Bereich von 1 mol : 1 mol bis 5 mol : 1 mol, stärker bevorzugt im Bereich von 1,1 mol : 1 mol bis 2,5 mol : 1 mol.

Als Lösungsmittel für die Diisocyanat- und/oder Diisothiocyanat-Verbindung werden bevorzugt Toluol, Chlorbenzol, Dichlorbenzol, Dioctylphtalat, Benzoylchlorid oder eine Mischung daraus verwendet. Das Mischungsverhältnis von Lösungsmittel und Diisocyanat- und/oder Diisothiocyanat-Verbindung liegt bevorzugt im Bereich von 5 mol : 1 mol bis 100 mol : 1 mol, stärker bevorzugt im Bereich von 10 mol : 1 mol bis 50 mol : 1 mol.

Vorzugsweise liegt das molare Verhältnis des Lösungsmittels für die Diisocyanat- und/oder Diisothiocyanat-Verbindung und des Lösungsmittels für die Guanidinium-Verbindung im Bereich von 5 mol :1 mol bis 100 mol :1 mol, stärker bevorzugt im Bereich von 10 mol :1 mol bis 50 mol :1 mol. Durch den bevorzugten Überschuss an Lösungsmittel für die Diisocyanat- und/oder Diisothiocyanat-Verbindung wird gewährleistet, dass die Nebenreaktionen des Lösungsmittels für die Guanidinium-Verbindung, das bevorzugt Alkohole oder Amine enthält, mit der Diisocyanat- und/oder Diisothiocyanat-Verbindung möglichst gering gehalten wird.

Dennoch kann es möglich sein, durch die Auswahl des Lösungsmittels für die Guanidinium-Verbindung die Eigenschaften des resultierenden Polyharnstoffs zu modifizieren. Durch Einsatz von Diaminen oder Diolen können dabei Polyharnstoffe mit großer Kettenlänge bzw. hoher mittlerer Molmasse erzielt werden, da es beim Einbau dieser Diamine oder Diole nicht zum Kettenabbruch kommt. Dagegen führt der Einbau von einwertigen Alkoholen oder primären Aminen zu Kettenabbruch und geringerer mittlerer Kettenlänge des resultierenden Polyharnstoffs. Eine geringere Molmasse des Polyharnstoffs kann bevorzugt sein, wenn z.B. eine bessere Löslichkeit des Polyharnstoffs erzielt werden soll.

Um den Polyharnstoff nach Beendigung der Polymerisation in Lösung zu halten oder dessen Weiterverarbeitung zu erleichtern, kann der Guanidinium-Verbindung und/oder der Diisocyanat- und/oder Diisothiocyanat-Verbindung ein weiteres Lösungsmittel vor der Polymerisation zugefügt werden. Hierzu finden bevorzugt Toluol, Chlorbenzol, Dichlorbenzol, Dioctylphtalat, Benzoylchlorid oder eine Mischung daraus Verwendung.

In einer Ausführungsform kann die Diisocyanat- und/oder Diisothiocyanat-Verbindung zunächst in ihrem Lösungsmittel vorgelegt werden und die in ihrem Lösungsmittel gelöste Guanidinium-Komponente zugegeben werden. In einer weiteren Ausführungsform kann die Guanidinium-Komponente zunächst in ihrem Lösungsmittel vorgelegt werden und die in ihrem Lösungsmittel gelöste Diisocyanat- und/oder Diisothiocyanat-Verbindung zugegeben werden. Die Geschwindigkeit der Zugabe kann in beiden Varianten im Bereich von 100 ml/min bis 1000 ml/min liegen.

Die Polymerisation findet bevorzugt in einem Temperaturbereich von 15°C - 100°C, stärker bevorzugt in einem Temperaturbereich von 20°C - 80°C statt.

In Einzelfällen kann es auch sinnvoll sein das Reaktionstempo zu verlangsamen. Hierfür kommt etwa eine Verkappung einzelner bzw. aller eingesetzten Amine bzw. Guanidine durch Ketone zu Ketiminen in Betracht. Diese Verkappungen können ggf. durch Hydrolyse beseitigt werden, bzw. erfolgt die Reaktion (sehr) verzögert spätestens durch Kontakt des Reaktionsproduktes mit normaler Luftfeuchtigkeit.

Ebenso kommt die vorübergehende Blockierung einzelner oder aller Isocyanate in Betracht. Als Blockierungsmittel hierfür sind prinzipiell alle Verbindungen, die eine phenolische OH-Gruppen tragen und, von dieser OH-Gruppe abgesehen, gegenüber Isocyanatgruppen inert sind, einsetzbar. Insbesondere kommen einwertige, C₁-C,₈-, vorzugsweise C₆-C₁₂-alkylsubstituierte Phenole mit vorzugsweise einem Alkylsubstituenten oder Estergruppen aufweisende Phenole in Betracht. Bevorzugte Beispiele geeigneter Phenole sind Phenol, die isomeren Kresole, die isomeren Xylenole, 2-sek.-Butylphenol, 4-tert.-Butylphenol, die isomeren Nonylphenole, Dodecylphenole oder Octadecylphenole, die isomeren Hydroxybenzoesäurealkylester mit 1 bis 18, vorzugsweise 1 bis 4 Kohlenstoffatomen im Alkylrest oder beliebige Gemische von derartigen Phenolen. Die Verwendung von technischen Nonylphenol-Isomerengemischen ist besonders bevorzugt. Des weiteren sind ggf. substituierte Pyrazole geeignete Bockierungsmittel. Dies sind z.B. Pyrazol, 3-(5)Methylpyrazol oder 3,5-Dimethylpyrazol. Die Verwendung von Pyrazol und 3,5-Dimethylpyrazol ist besonders bevorzugt. Schließlich eignen sich beispielhaft auch Butanonoxim, ε-Caprolactam sowie sekundäre Monoamine wie z.B. Di-n-Butylamin.

Weiterhin kann der erfindungsgemäße Polyharnstoff modifiziert werden. In Betracht kommen hierbei die Modifikation der endständigen funktionellen Gruppen des Polyharnstoffs durch Reaktion mit Wasser oder Aminen. Die erfindungsgemäßen Polyharnstoffe mit endständigen Isocyanaten eignen sich zur chemischen Modifikation mit Monoaminen wie z.B. Anilin bzw. organischen Säuren/Alkoholen/Phenolen. Durch diese chemische Modifikation ist es möglich polymere Guanidin-Verbindungen mit (nahezu) beliebigen endständigen funktionellen Gruppen zu erzeugen.

Diese Monoamine können entweder nachträglich mit erfindungsgemäßen Polyharnstoffen mit endständigen Isocyanaten zur Reaktion gebracht werden, oder aber bereits bei der Polymerisationsreaktion als Lösungsmittel für die Guanidin-Komponente eingesetzt werden.

Des weiteren kommt die Modifikation des pH-Werts des Polyharnstoffs durch Zugabe von Säuren oder Basen oder durch Ionenaustausch, insbesondere der Guanidin-Gegenionen in Betracht. Durch den - ggf. nur teilweisen - Tausch der Guanidin-Gegenionen bzw. die entsprechende Zugabe von Säuren lassen sich Gemische mit beliebigen pH Werten herstellen. So ist insbesondere durch Zugabe von Phosphorsäure zu Polyharnstoff mit Guanidinium-Hydroxid die Herstellung eines pH neutralen, gepufferten Polyharnstoffs mit Guanidinium Phosphat-, Guanidinium Hydrogenphosphat- und Guanidinium Hydroxid-Comonomeren möglich.

Eine weitere Möglichkeit zur Modifikation des Polyharnstoffs besteht darin, die Gegenionen des Polyharnstoffs durch Ionenaustauschreaktion ganz oder teilweise auszutauschen. Insbesondere der Austausch von Cl⁻ Ionen gegen OH- Ionen ist für Anwendungen in korrosionsanfälligen Umgebungen bzw. hinsichtlich der biologischen Abbaubarkeit und der entstehenden Abbauprodukte von entscheidendem Vorteil. Ebenso stellt Guanidinium Hydroxid ein sehr geeignetes und bevorzugtes Zwischenprodukt zur einfachen Herstellung von z.B. Poly Guanidinium Phosphat durch den (weiteren) Austausch der OH- Ionen dar. Einzelne Polyguanidinsalze lassen sich aufgrund ihres Löslichkeitsverhaltens in der Anwendungspraxis ebenfalls besser durch Polymerisation von Guanidinium-Chlorid oder Guanidinium Hydroxid und nachfolgenden Ionentausch herstellen, als dies durch direkte Polymerisation der Fall wäre.

Verfahren zur Durchführung der Ionentauschreaktionen sind seit langem bekannt. Zusätzlich sind Vorrichtungen zur Durchführung solcher Reaktionen wie z.B. Tauschersäulen im Handel verfügbar.

Der erfindungsgemäße Polyharnstoff weist vorzugsweise biozide Eigenschaften auf.

Es wird bevorzugt, dass der Polyharnstoff Mikroorganismen wie Bakterien, Viren, Pilze und Hefen abtötet.

Weiterer Gegenstand der vorliegenden Erfindung ist daher die Verwendung des erfindungsgemäßen Polyharnstoffs als Beschichtungsmaterial. Der erfindungsgemäße Polyharnstoff umfasst hierbei alle beschriebenen Ausführungsformen und Spezifikationen.

Hierbei kommt insbesondere die Anwendung als Oberflächenbeschichtung von Tanks, Kanistern, Fässern, Becken, Röhren, Leitungen, Kühltürmen, und anderen flüssigkeitsführenden bzw. zur Aufnahme von Flüssigkeiten bestimmten Systemen, insbesondere von solchen in denen die Flüssigkeit Wasser ist, zur verlängerten bzw. dauerhaften Konservierung der in diesen Systemen geführten Substanzen bzw. zur Inhibierung von Bakterien- bzw. Pilzbildung in diesen Systemen in Betracht.

Weiterhin kommt der erfindungsgemäße Polyharnstoff als Oberflächenbeschichtung von Verpackungsmaterialien für verderbliche Güter, insbesondere Lebensmitteln, zur verlängerten bzw. dauerhaften Konservierung der in diesen Verpackungen aufbewahrten Güter bzw. zur Inhibierung von Bakterien- bzw. Pilzbildung an den Oberflächen dieser Verpackungen bzw. den Kontaktflächen dieser Verpackungen mit den darin aufbewahrten Gütern in Betracht.

Des Weiteren kann der erfindungsgemäße Polyharnstoff bevorzugt als Oberflächenbeschichtung von Reinräumen (Clean rooms) bzw. Reinraumoberflächen verwendet werden.

Die Anwendung des erfindungsgemäßen Polyharnstoffs als Oberflächenbeschichtung von Krankenhaus- und Operationsräumen bzw. Krankenhausraum und Operationsraumoberflächen zur verlängerten bzw. dauerhaften Dekontaminierung dieser Räume bzw. zur Inhibierung von Bakterien- bzw. Pilzbildung an den Oberflächen dieser Räume ist ebenfalls bevorzugt.

Weiterhin findet der erfindungsgemäße Polyharnstoff bevorzugt Anwendung als Oberflächenbeschichtung von Sanitätsräumen bzw. Sanitätsraumoberflächen zur verlängerten bzw. dauerhaften Dekontaminierung dieser Räume bzw. zur Inhibierung von Bakterien- bzw. Pilzbildung an den Oberflächen dieser Räume.

Zusätzlich findet der erfindungsgemäße Polyharnstoff bevorzugt Anwendung als Oberflächenbeschichtung von Räumen zur Verarbeitung von Lebensmitteln bzw. Oberflächen von Räumen zur Verarbeitung von Lebensmitteln zur verlängerten bzw. dauerhaften Dekontaminierung dieser Räume bzw. zur Inhibierung von Bakterien- bzw. Pilzbildung an den Oberflächen dieser Räume.

Die Anwendung zur Oberflächenbeschichtung von Einrichtungsgegenständen von Reinräumen (Clean Rooms), Krankenhausräumen, Operationsräumen, Sanitätsräumen, Räumen zur Verarbeitung von Lebensmitteln bzw. zur Oberflächenbeschichtung von solchen Einrichtungsgegenständen zur verlängerten bzw. dauerhaften Dekontaminierung dieser Gegenstände bzw. zur Inhibierung von Bakterien- bzw. Pilzbildung an den Oberflächen dieser Gegenstände ist ebenfalls bevorzugt.

Schließlich umfasst die vorliegende Erfindung einen Gegenstand, der den erfindungsgemäßen Polyharnstoff enthält, vorzugsweise ausgewählt aus den bereits beschriebenen Gegenständen.

Der erfindungsgemäße Gegenstand kann ausschließlich aus dem Polyharnstoff bestehen. Es ist jedoch bevorzugt, dass der Gegenstand nur zu einem Teil aus dem Polyharnstoff besteht. Es ist besonders bevorzugt dass der Gegenstand den Polyharnstoff als Beschichtung enthält.

Die Erfindung wird durch die folgenden Beispiele veranschaulicht. Die Erfindung ist jedoch nicht auf die Beispiele limitiert.

### Beispiel 1:

### Polymerisation von Guanidinium-Chlorid mit 1,6-Hexamethylen-Diisocyanat (HDI) und Ethylendiamin (EDA) zu Polyharnstoff mit endständigen Aminen

In einem 600 ml Becherglas werden 350 g (3,8 mol) Toluol vorgelegt. Zu diesem werden 33,64 g (0,2 mol) 1,6-Hexamethylen-Diisocyanat (HDI) beigemischt. Anschließend werden die beiden Substanzen durch Rühren für ca. 2 Minuten vollständig vermischt.

In einem 50 ml Becherglas werden 9,55 g Guanidinium-Chlorid (0,1 mol) in 12,02 g Ethylendiamin (0,2 mol) unter Rühren und leichtem Erwärmen aufgelöst. Die dabei entstehende stabile Lösung wird in ein 2000 ml Becherglas überführt, und dort mit 250 g (2,7 mol) Toluol verdünnt. Zur Vermeidung eines Ausfallens des Guanidins wird die Lösung mit dem Toluol nur kurz unter Zuhilfenahme eines Magnetrührers durchmischt (nicht länger als 30 Sekunden). Unverzüglich danach wird unter weiterem ständigen Einsatz des Magnetrührers die vorbereitete Toluol/HDI Mischung langsam mit einer Geschwindigkeit von ca. 400 ml pro Minute hinzugefügt.

Es kommt zu einem unmittelbaren Ausfall eines weißen amorphen Niederschlags, sowie zu einer leichten Erwärmung des Reaktionsgefäßes. Um eine vollständige Reaktion des gesamten eingesetzten HDI zu gewährleisten wird die Mischung für weitere 120 Minuten gerührt.

Danach werden 1050 ml Wasser unter weiterem Rühren zugegeben. Dabei ist ein nahezu sofortiges Auflösen des Niederschlags zu beobachten, zudem wird das Gemisch milchig trüb.

Nach ca. 30 minütigem weiteren Rühren zur Sicherstellung der vollständigen Lösung aller Reaktionsprodukte wird das Gemisch in einen Scheidetrichter überführt und für mindestens 24 Stunden stehen gelassen. Es erfolgt eine Phasentrennung des Toluols und des Wasser, sowie ein Aufklaren beider Phasen.

Danach wir die Wasserphase abgetrennt. Das verbleibende Toluol kann ggf. für weitere gleichartige Prozesse wiederverwendet werden.

In der Wasserphase verbleibt das Reaktionsprodukt als ca. 5 prozentige Lösung. Diese kann z.B. durch Verdampfung des Wassers unter Vakuum ggf. aufkonzentriert werden, bzw. kann das Produkt durch vollständige Trocknung, z.B. durch Sprühtrocknen in Reinform isoliert werden.

### Beispiel 2:

### Polymerisation von Guanidinium-Chlorid mit 1,6-Hexamethylen-Diisocyanat (HDI) und Ethylendiamin (EDA) zu Polyharnstoff mit endständigen Isocyanaten

In einem 2000 ml Becherglas werden 900 g (9,7 mol) Toluol vorgelegt. Zu diesem werden 67,28 g (0,4 mol) 1,6-Hexamethylen Diisocyanat (HDI) beigemischt. Anschließend werden die beiden Substanzen durch Rühren für ca. 2 Minuten vollständig vermischt. Danach werden 25,85 g (0,2 mol) Di-n-Butylamin beigefügt, und das Gemisch für mindestens weitere 120 Minuten gerührt. Ggf. wird durch Kühlung sichergestellt, dass die Temperatur des Gemisches nicht über 60°C steigt.

In einem 600 ml Becherglas werden 9,55 g (0,1 mol) Guanidinium-Chlorid in 12,02 g (0,2 mol) Ethylendiamin unter Rühren und leichtem Erwärmen aufgelöst. Die dabei entstehende stabile Lösung wird mit 400 g (4,3 mol) Toluol verdünnt. Zur Vermeidung eines Ausfallens des Guanidins wird die Lösung mit dem Toluol nur kurz unter Zuhilfenahme eines Magnetrührers durchmischt (nicht länger als 30 Sekunden). Unverzüglich danach wird das Gemisch unter ständigen Einsatz eines Magnetrührers zur vorbereiteten Toluol/HDI/Di-n-Butylamin Mischung langsam mit einer Geschwindigkeit von ca. 300 ml pro Minute hinzugefügt.

Es kommt zur Bildung von weißen bzw. leicht transparenten Schlieren bzw. Fäden, sowie zu einer leichten Erwärmung des Reaktionsgefäßes. Die Fäden können sich zu Klumpen bzw. größeren tropfenförmigen Gebilden zusammenschließen. Um eine vollständige Reaktion des gesamten eingesetzten HDI zu gewährleisten wird das Reaktionsgemisch unter Erwärmung auf ca. 80°C gerührt. Danach wird das Gemisch für mindestens 12 Stunden stehen gelassen.

Das Reaktionsprodukt kann im Toluol weiterverarbeitet werden, oder durch Destillation des Toluols (vorzugsweise unter Vakuum) aufkonzentriert bzw. völlig abgetrennt werden.

### Beispiel 3:

### Polymerisation von Poly-Guanidinium-Chlorid mit 1,6-Hexamethylen-Diisocyanat (HDI) und Ethylendiamin (EDA) zu Polyharnstoff mit endständigen Aminen

In einem 600 ml Becherglas werden 350 g (3,8 mol) Toluol vorgelegt. Zu diesem werden 33,64 g (0,2 mol) 1,6-Hexamethylen-Diisocyanat (HDI) beigemischt. Anschließend werden die beiden Substanzen durch Rühren für ca. 2 Minuten vollständig vermischt.

In einem 250 ml Kolben werden 150 g einer 50 prozentigen wässrigen Lösung eines Gemischs polymerisierten Guanidinium-Chlorids (Hersteller: Shanghai Jucheng Chemical Co., CAS Nr. 57028-96-3) sowie 20,8 g (0,2 mol) 2,2'-Oxybis-ethanamin ("JEFFAMINE EDR-104", Hersteller: Huntsman Corporation) vermischt. Anschließend wird der Wasseranteil von ca. 75 g unter Vakuum abgedampft. Das trockene Poly-Guanidinium/Oxyalkylen-Gemisch wird in ein 3000 ml Becherglas überführt, dort mit 1000 g (10,9 mol) Toluol verdünnt und kurz unter Zuhilfenahme eines Magnetrührers durchmischt. Danach wird unter weiterem ständigen Einsatz des Magnetrührers die vorbereitete Toluol/HDI Mischung langsam mit einer Geschwindigkeit von ca. 400 ml pro Minute hinzugefügt.

Es kommt zu einem Ausfall eines weißen amorphen Niederschlags, sowie zu einer leichten Erwärmung des Reaktionsgefäßes. Um eine vollständige Reaktion des gesamten eingesetzten HDI zu gewährleisten wird das Reaktionsgemisch für weitere 120 Minuten gerührt.

Danach werden 1400 ml Wasser unter weiterem Rühren zugegeben. Dabei ist ein Auflösen des Niederschlags zu beobachten, zudem wird das Gemisch milchig trüb.

Nach ca. 60 minütigem weiteren Rühren zur Sicherstellung der vollständigen Lösung aller Reaktionsprodukte wird das Gemisch in einen Scheidetrichter überführt und für mindestens 24 Stunden in Ruhe stehen gelassen. Es erfolgt eine Phasentrennung des Toluols und des Wasser, sowie ein Aufklaren beider Phasen.

Danach wir die Wasserphase abgetrennt. Das verbleibende Toluol kann ggf. für weitere gleichartige Prozesse wiederverwendet werden.

In der Wasserphase bleibt das Reaktionsprodukt als ca. 5 prozentige Lösung zurück. Diese kann z.B. durch Verdampfung des Wassers unter Vakuum ggf. aufkonzentriert werden, bzw. kann das Produkt durch vollständige Trocknung, z.B. durch Sprühtrocknen in Reinform isoliert werden.

### Beispiel 4:

### Polymerisation von Poly-Hexamethylen-Biguanidin mit 1,6-Hexamethylen-Diisocyanat (HDI) und Ethylendiamin (EDA) zu Polyharnstoff mit endständigen Isocyanaten

In einem 600 ml Becherglas werden 900 g (9,7 mol) Toluol vorgelegt. Zu diesem werden 67,28 g (0,4 mol) 1,6-Hexamethylen-Diisocyanat (HDI) zugegeben. Anschließend werden die beiden Substanzen durch Rühren für ca. 2 Minuten vollständig vermischt. Danach werden 25,85 g (0,2 mol) Di-n-Butylamin beigefügt, und das Gemisch für mindestens weitere 120 Minuten gerührt. Durch Kühlung wird sichergestellt, dass die Temperatur des Gemischs nicht über 60°C steigt.

In einem 500 ml Rundkolben werden 300g einer 20 prozentigen wässrigen Lösung eines Gemischs polymerisierten Guanidinium-Chlorids (z.B. "Vantocil", Hersteller: Arch Chemicals GmbH) sowie 20,8 g (0,2 mol) 2,2'-Oxybis-ethanamin ("JEFFAMINE EDR-104", Hersteller: Huntsman Corporation) vermischt. Anschließend wird das Wasser (240 g) unter Vakuum abgedampft. Das trockene Poly-Biguanidin/Oxyalkylenamin Gemisch wird in ein 3000 ml Becherglas überführt, dort mit 850 g Toluol verdünnt und kurz unter Zuhilfenahme eines Magnetrührers durchmischt. Danach wird unter weiterem ständigem Einsatz des Magnetrührers die vorbereitete Toluol/HDI Mischung langsam mit einer Geschwindigkeit von ca. 400 ml pro Minute zugefügt.

Es kommt zur Bildung von weißen bzw. leicht transparenten Schlieren bzw. Fäden, sowie zu einer leichten Erwärmung des Reaktionsgefäßes. Die Fäden können sich zu Klumpen bzw. größeren tropfenförmigen Gebilden zusammenschließen. Um eine vollständige Reaktion des gesamten eingesetzten HDls zu gewährleisten wird das Reaktionsgemisch für weitere 240 Minuten unter Erwärmung auf mindestens 80°C gerührt. Danach wird das Gemisch für mindestens 12 Stunden stehen gelassen. Das Reaktionsprodukt kann im Toluol weiterverarbeitet werden, oder durch Destillation des Toluols (vorzugsweise unter Vakuum) aufkonzentriert bzw. völlig abgetrennt werden.

### Beispiel 5:

### Polymerisation von Poly-Hexamethylen-Biguanidin mit Phenethyl-Isothiocyanat (PEITC) und Monoethylenglykol (MEG) zu Polyharnstoff mit endständigen Isothiocyanaten

In einem 1000 ml Becherglas werden 8,12 g (0,05 mol) Phenethyl-Isothiocyanat (PEITC) und 800 g Ethanol unter Einsatz eines Magnetrührers vermischt.

In einem 1000 ml Rundkolben werden 750 ml 20 prozentige Poly-Hexamethylen-Biguanidin-Chlorid Lösung (z.B. "Vantocil", Hersteller: Arch Chemicals GmbH) durch Verdampfung unter Vakuum zu einer 50 prozentigen Lösung aufkonzentriert. Danach werden 150 g Monoethylenglykol (MEG) zugegeben, und das restliche Wasser abdestilliert. Die so gewonnene Lösung wird in ein 2000 ml Becherglas überführt, und durch Zugabe von weiteren 700g Ethanol unter Einsatz eines Magnetrührers weiter verdünnt und für ca. 60 Minuten homogenisiert. Zu diesem Gemisch wird die vorbereitete Ethanol/PEITC Lösung unter Rühren langsam zugetropft.

Unter Erwärmung auf mindestens 70°C und höchstens 75°C wird das Gemisch für mindestens 3 Stunden weiter gerührt. Es bildet sich ein weißer bis gelblicher amorpher Niederschlag.

Dieser Niederschlag kann z.B. durch Abdestillieren des Alkohol/Glykol Gemisches isoliert werden. Er ist in Wasser nahezu unlöslich, und in Alkoholen schwer löslich. Mit Alkoholen lässt sich das Reaktionsprodukt jedoch in ein stark klebriges Gemisch überführen, welches nach Verdampfung der Alkohole wieder aushärtet.

### Beispiel 6:

### Biozide Wirkung der Polyharnstoffe aus den Beispielen 1 und 3

Zum Nachweis der bioziden Wirkung der erfindungsgemäßen Polyharnstoffe werden die 5 % wässrigen Lösungen der Beispiele 1 und 3 mit destilliertem Wasser um den Faktor 1:50 auf eine Konzentration von 0.1 % verdünnt.

Agar- Platten werden mit unten genannten Bakterien und Pilzkulturen beimpft. Danach werden aus den Platten kreisförmige Probeflächen mit einem Durchmesser von 10mm ausgestanzt. In diese Probeflächen werden sodann die auf eine Konzentration von 0.1% verdünnten, gem. den Beispielen 1 bzw. 3 hergestellten Substanzen, sowie als Vergleichssubstanz destilliertes Wasser auf die Probeflächen innerhalb der beimpften Agarplatten aufgetropft. Nach einer Inkubationszeit von 8 Tagen bei 37°C erfolgt die Ausmessung der Hemmhofränder.

Angaben zur technischen Durchführung:
- Nährbodenschalen mit 140 mm Durchmesser mit 100 ml Nähragar
- Nähragar für Pilze: BRC- Agar
- Nähragar für Bakterien: CS- Agar

Prüfstämme:
- Staphylococcus aureus
- Pseudomonas aeruginosa
- Candida albicans
- Acremonium spec.

Keimzahlen der Prüfstämme:
Die Ausgangskeimzahlen der Bakterien und Pilzkulturen betrugen ca. 1x10⁸/ml bis 5x10⁸/ml. Die Keime wurden bei einer Agar- Temperatur von ca. 40 °C in den flüssigen Agar eingemischt; danach wurde der Agar gegossen.

**Tabelle 1: Testergebnisse**

| Testkeim: | Breite des Hemmhofes [mm] | | |
|---|---|---|---|
| | Referenzprobe dest. Wasser | Lösung 0,1 % gem. Beispiel 1 | Lösung 0,1 % gem. Beispiel 3 |
| **Staph.aureus** | 0 | 3 | 3-4 |
| **Ps. Aeruginos** | 0 | 1 | 2 |
| **Cand. albicans** | 0 | 8 | 4 |
| **Acremonium** | 0 | 3 | 3-4 |

## Patentansprüche

1. Polyharnstoff aus einer Guanidinium-Verbindung der Formel (I) 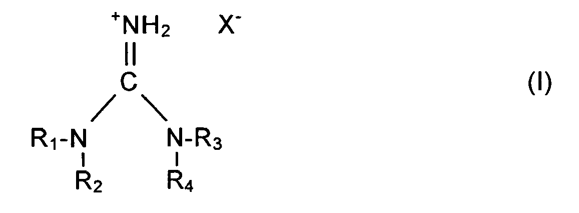 wobei R₁, R₂, R₃, R₄ = unabhängig voneinander H, [-C(=⁺NH₂)-NHR₅
+ X⁻], oder ein organischer Rest,
R₅ = H oder ein organischer Rest und
X' = Anion;
und einer Diisocyanat-Verbindung der Formel (II)
O=C=N-R₆-N=C=O (II)
wobei R₆ = organischer Rest, der 1-40 Kohlenstoffatome umfasst, und/oder einer Diisothiocyanat-Verbindung der Formel (III)
S=C=N-R₇-N=C=S (III)
wobei R₇ = organischer Rest, der 1-40 Kohlenstoffatome umfasst.

2. Der Polyharnstoff nach Anspruch 1 mit einer mittleren Molmasse von 250 bis 5000 g/mol.

3. Der Polyharnstoff nach Anspruch 1 oder 2, wobei die Anzahl n der Guanidinium-Verbindungen im Polyharnstoff im Bereich von 2-100 liegt.

4. Der Polyharnstoff nach einem der vorangegangenen Ansprüche, wobei das molekulare Verhältnis der Guanidinium-Verbindung zu der Diisocyanat-Verbindung und/oder Diisothiocyanat-Verbindung im Bereich von 10 mol : 1 mol bis 1 mol : 10 mol liegt.

5. Der Polyharnstoff nach einem der vorangegangenen Ansprüche, wobei X⁻ Fluorid, Chlorid, Bromid, Iodid, Hydroxid, Acetat, Phosphat, Diphosphat, Sulfat, Sulfid, Nitrat, Thiocyanat, Carbonat, Maleat, Fumarat, Tartrat, Mesylat, Gluconat oder Toluolsulfonat ist.

6. Der Polyharnstoff nach einem der vorangegangenen Ansprüche, wobei die organische Reste R₁, R₂, R₃, R₄, R₅, R₆ und R₇ in den Formeln (I), (II) und (III) unabhängig voneinander aliphatische oder aromatische Kohlenwasserstoffreste mit 1-40 Kohlenstoffatomen sind.

7. Der Polyharnstoff nach einem der vorangegangenen Ansprüche, wobei die Guanidinium-Verbindung eine Polyguanidinium-Verbindung ist.

8. Der Polyharnstoff nach Anspruch 7, wobei die Polyguanidinium-Verbindung eine Aminverbindung mit mindestens 2 Amingruppen enthält, die bevorzugt aus einer Gruppe bestehend aus Ethylendiamin, Triethylenglycoldiamin, Hexamethylendiamin, Diaminopropan, Diethylentriamin und Polyoxyalkylendiaminen ausgewählt wird.

9. Der Polyharnstoff nach Anspruch 7 oder 8, wobei die Polyguanidinium-Verbindung eine Guanidinium-Verbindung enthält, die bevorzugt aus einer Gruppe bestehend aus Guanidinium-Fluorid, Guanidinium-Chlorid, Guanidinium-Bromid, Guanidiniumlodid, Guanidinium-Hydroxid, Guanidinium-Acetat, Guanidinium-Phosphat, Guanidinium-Diphosphat, Guanidinium-Sulfat, Guanidinium-Sulfid, Guanidinium-Nitrat, Guanidinium-Thiocyanat, Guanidinium-Carbonat, Guanidinium-Maleat, Guanidinium-Fumarat, Guanidinium-Tartrat, Guanidinium-Mesylat, Guanidinium-Gluconat, Guanidinium-Toluolsulfonat, Biguanidinium-Fluorid, Biguanidinium-Chlorid, Biguanidinium-Bromid, Biguanidinium-Iodid, Biguanidinium-Hydroxid, Biguanidinium-Acetat, Biguanidinium-Phosphat, Biguanidinium-Diphosphat, Biguanidinium-Sulfat, Biguanidinium-Sulfid, Biguanidinium-Nitrat, Biguanidinium-Thiocyanat, Biguanidinium-Carbonat, Biguanidinium-Maleat, Biguanidinium-Fumarat, Biguanidinium-Tartrat, Biguanidinium-Mesylat, Biguanidinium-Gluconat oder Biguanidinium-Toluolsulfonat ausgewählt wird.

10. Verfahren zur Herstellung des Polyharnstoffs nach einem der Ansprüche 1 bis 9, wobei die Guanidinium-Verbindung in einem Lösungsmittel verdünnt und anschließend mit der gegebenenfalls ebenfalls mit einem Lösungsmittel verdünnten Diisocyanat-Verbindung und/oder Diisothiocyanat-Verbindung vermischt wird.

11. Das Verfahren nach Anspruch 10, wobei die endständigen funktionellen Gruppen des Polyharnstoffs durch Reaktion mit Wasser oder Aminen modifiziert werden.

12. Das Verfahren nach Anspruch 10 oder 11, wobei der pH-Wert des Polyharnstoffs durch Zugabe von Säuren oder Basen oder durch Ionenaustausch modifiziert wird.

13. Das Verfahren nach einem der Ansprüche 10 bis 12, wobei die Gegenionen des Polyharnstoffs durch Ionenaustauschreaktion ganz oder teilweise ausgetauscht werden.

14. Gegenstand, der den Polyharnstoff nach einem der Ansprüche 1 bis 9 enthält.

15. Verwendung des Polyharnstoffs nach einem der Ansprüche 1 bis 9 als Beschichtungsmaterial.
